# EUROPEAN PATENT APPLICATION

(11) **EP 2 456 054 A2**
(43) Date of publication of application: **23.05.2012**
(21) Application number: 11189253.5
(22) Date of filing: 15.11.2011
(51) Int. Cl.: H02K 11/04, H02K 9/19

(54) **Integrated electric machine and silicon carbide power converter assembly and method of making same**

(30) Priority: 19.11.2010 US 949862
(71) Applicant: General Electric Company, Schenectady, NY 12345 (US)
(72) Inventor: El-Refaie, Ayman Mohamed Fawzi, Niskayuna, NY 12309 (US); King, Robert Dean, Niskayuna, NY 12309 (US)
(74) Representative: Illingworth-Law, William Illingworth

(57) **Abstract**

An electric drive system comprising an electric machine comprising a rotor and a stator, a power converter electrically coupled to the electric machine and configured to convert a DC link voltage to an AC output voltage to drive the electric machine, and a single cooling loop, wherein the electric machine and the power converter are integrated within the single cooling loop.

## Description

### BACKGROUND OF THE INVENTION

Embodiments of the invention relate generally to electric machines and, more particularly, to an electric machine and power converter integrated within a single cooling loop, wherein the power converter comprises silicon carbide metal-oxide-semiconductor field effect transistors (MOSFETs).

The need for high power density and high efficiency electric machines (i.e., electric motors and generators) has long been prevalent for a variety of applications, particularly for hybrid and/or electric vehicle traction applications. Due to energy supply and environmental reasons, there has been increased motivation to produce hybrid-electric and/or electric vehicles that are both highly efficient and reliable, yet reasonably priced for the average consumer. However, the drive motor technology available for hybrid-electric and electric vehicles has generally been cost-prohibitive, thereby reducing one (or both) of consumer affordability or manufacturer profitability.

Most commercially available hybrid-electric and electric vehicles rely on internal permanent magnet (IPM) electric machines for traction applications, as IPM machines have been found to have high power density and high efficiency over a wide speed range, and are also easily packaged in front-wheel-drive vehicles. However, IPM machines are not the only electric machines used for traction applications. Other types of electric machines, such as induction machines, have certain advantages that make them desirable for particular traction applications.

Regardless of the type of electric machine utilized, various power electronic devices are needed to provide power to the electric machine during operation. These power electronic devices have conventionally included silicon controlled rectifiers (SCRs), insulated gate bipolar transistors (IGBTs), and/or field effect transistors (FETs). In hybrid-electric and/or electric vehicle applications, a source of direct current is typically available from a battery or power supply system incorporating a battery or other energy converter. A power converter is employed to convert this power to alternating current (AC) waveforms for driving the one or more electric motors of the vehicle. The electric motors, in turn, serve to drive power transmission elements to propel the vehicle.

While power electronic devices are integral to the functionality of hybrid-electric and electric drive systems, there are inherent limitations to their size and placement in such applications. Due to varying environmental conditions in the regions surrounding the electric machine, such as heat generated by the electric machine during operation, the power converter of the system is typically mounted relatively far away from the electric machine to which it is coupled. This distant mounting point helps to prevent component failure in the power converter due to overheating. However, there are also several drawbacks to such distant mounting. One drawback is increased electromagnetic interference (EMI) due to the extended cable connections needed to couple the power converter with the electric machine. Another drawback is the need for a dedicated cooling loop to be provided for the power converter itself, a cooling loop that is entirely separate from any cooling loop utilized for the electric machine. This separate cooling loop significantly adds to the cost, weight, and complexity of the overall system, as well as increasing the overall size of the system.

It would therefore be desirable to have an apparatus and method of fabricating an electric motor and a power converter integrated within a single cooling loop.

### BRIEF DESCRIPTION OF THE INVENTION

In accordance with one aspect of the invention, an electric drive system is shown, the electric drive system comprising an electric machine comprising a rotor and a stator, a power converter electrically coupled to the electric machine and configured to convert a DC link voltage to an AC output voltage to drive the electric machine, and a single cooling loop, wherein the electric machine and the power converter are integrated within the single cooling loop.

In accordance with another aspect of the invention, a method of manufacturing an electric drive system is shown, the method comprising the steps of providing a silicon carbide (SiC) power converter having a plurality of SiC switching devices, the SiC power converter coupleable to a power source, providing an electric machine having a rotor and a stator, coupling the SiC power converter to the electric machine to drive the electric machine, and providing a cooling loop, wherein the SiC power converter and the electric machine are integrated within the cooling loop.

In accordance with another aspect of the invention, a vehicle drive system is shown, the vehicle drive system comprising a motor comprising a rotor and a stator, a DC link, a power converter electrically coupled between the DC link and the motor to drive the motor, wherein the power converter comprises a plurality of silicon carbide (SiC) switching devices, and a cooling loop, wherein the motor and the power converter are integrated within the cooling loop.

Various other features and advantages will be made apparent from the following detailed description and the drawings.

### BRIEF DESCRIPTION OF THE DRAWINGS

The drawings illustrate embodiments presently contemplated for carrying out the invention.

In the drawings:
FIG. 1 illustrates a conventional electric machine drive system.
FIG. 2 illustrates an electric machine drive system in accordance with an embodiment of the invention.
FIG. 3 is a schematic view of a cooling loop for an electric machine drive system in accordance with an embodiment of the invention.

### DETAILED DESCRIPTION

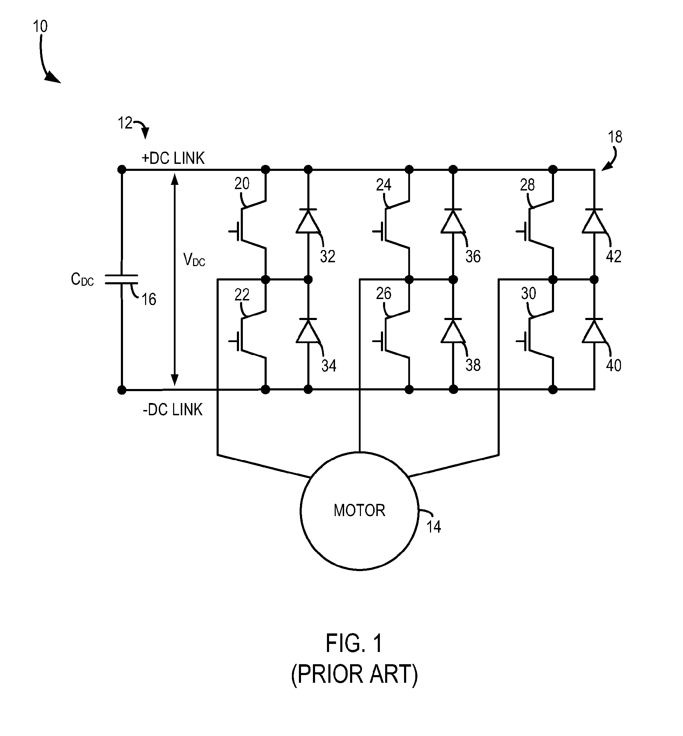

FIG. 1 illustrates a conventional three-phase electric machine drive system 10. System 10 includes a DC link 12 that provides a DC input voltage that is converted or inverted to an AC waveform that powers an AC electric machine 14. An input filter capacitor 16 is coupled across the DC link 12 for filtering the voltage VDC on DC link 12 when power flows from DC link 12 to AC electric machine 14. This direction of power flow is often referred to operating in a "motoring" mode. When the direction of power flow is from electric machine 14 to the power converter 18, the input voltage to power converter 18 is AC from electric machine 14, while the output from power converter 18 is a DC voltage on DC link 12. Operation with power flow from AC electric machine 14 to power converter 18 is often referred to operation in a regenerative braking mode that is useful, for example, in a vehicle, where it is desirable to hold a given value of speed on a downhill grade, or while decelerating the vehicle. Power converter 18 receives the input voltage from DC link 12. Power converter 18 is a typical 3-phase inverter having two series-connected switching devices per phase leg. For example, devices 20 and 22 form a first phase leg, devices 24 and 26 form a second phase leg, and devices 28 and 30 form a third phase leg. Devices 20-30 are conventional silicon semiconductor switching devices such as, for example, silicon IGBT, MOSFET, silicon bi-polar Darlington power transistor, GTO, SCR, or IGCT type devices. Diodes 32, 34, 36, 38, 40, 42 are coupled in anti-parallel relationship across respective silicon switching devices 20-30.

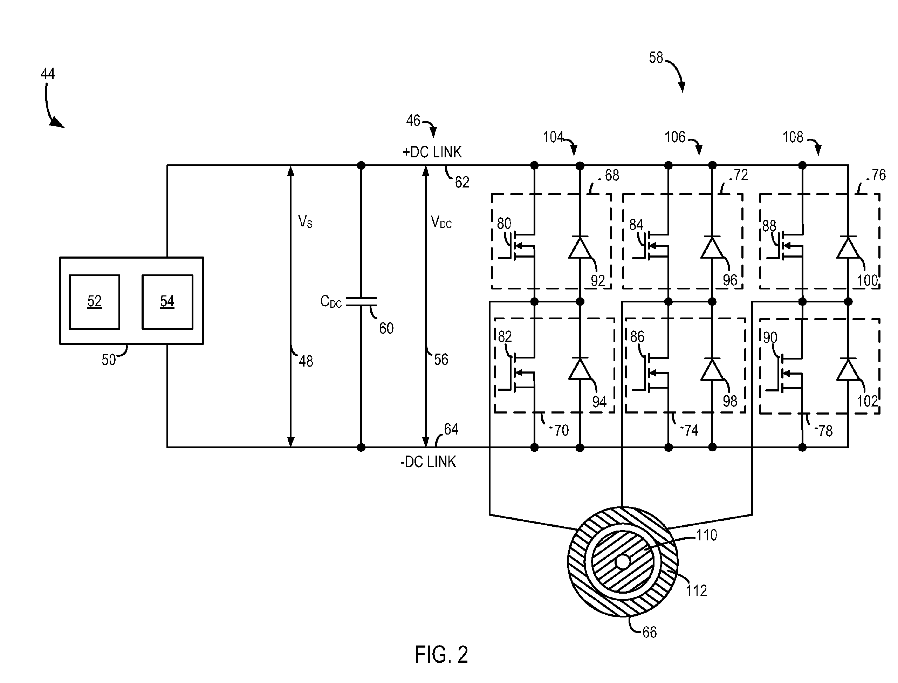

FIG. 2 illustrates an electric machine drive system 44 in accordance with an embodiment of the invention. Drive system 44 includes a DC link 46 having a DC source voltage Vₛ 48. Drive system 44 includes a power source 50 that provides DC source voltage Vₛ 48. In one embodiment, power source 50 includes an AC source 52 and a rectifier 54 configured to convert a voltage of AC source 52 to the DC link or source voltage Vₛ. In another embodiment (not shown), power source 50 includes a DC power source 54, such as a battery, a fuel cell, a flywheel with associated power electronic converter. In yet another embodiment, power source 50 includes a DC power source 52, such as a battery, a fuel cell, an ultracapacitor, a flywheel with associated power electronic control coupled to a bi-directional DC-to-DC voltage converter 54 that boosts the source voltage to the DC link or source voltage Vₛ. DC link 46 supplies a DC output voltage V_{DC} 56 to a power converter or inverter 58. An input filter capacitor 60 is illustrated between a positive DC rail 62 and a negative DC rail 64 and serves to provide a filter function for the high frequency currents from source 50 to ensure the power quality between positive and negative rails 62, 64.

Power converter 58 receives DC input voltage VDC 56 from DC link 46 and is converted or inverted to provide a suitable form of AC power for driving electric machine 66, described in detail below.

According to one embodiment, power converter 58 is a three-phase DC to AC inverter having a plurality of switching devices 68, 70, 72, 74, 76, 78. Each switching device 68-78 includes a silicon carbide (SiC) MOSFET 80, 82, 84, 86, 88, 90 and an associated anti-parallel diode 92, 94, 96, 98, 100, 102.

SiC is a crystalline substance that has material properties that make it an attractive alternative to silicon for high voltage and high power applications. For example, SiC has a large bandgap that provides a very low leakage current, which facilitates elevated temperature operation. In fact, semiconductor devices manufactured on a SiC substrate can withstand temperatures in excess of 200 degrees Celsius. SiC also has a high breakdown field that is about ten times that of silicon and a thermal conductivity that is about three times that of silicon, allowing higher power densities to be accommodated with SiC circuits. Further, SiC's high electron mobility enables high-speed switching. Thus, SiC has been considered as an advantageous material for use in the manufacture of next generation power semiconductor devices. Such devices include, for example, Schottky diodes, thyristors, and MOSFETs.

Moving from left to right in FIG. 2, switching devices 68, 70 are associated with a first output phase 104, switching devices 72, 74 are associated with a second output phase 106, and switching devices 76, 78 are associated with a third output phase 108. While a three-phase power converter is illustrated in FIG. 2, one skilled in the art will understand that embodiments of the present invention are equally applicable to any multi-phase power converter. For example, alternate embodiments include configurations with varying number of phases, e.g., n-phase, where n = 1,2, 4, 5 or higher number, where each phase of the power converter includes a plurality of switching devices similar to devices 68, 70, each with associated anti-parallel diodes similar to diodes 92, 94.

Power converter 58 is configured to drive electric machine 66. In one embodiment, electric machine 66 is configured to be a permanent magnet electric machine having a permanent magnet rotor 110 and a stator 112. In alternative embodiments, however, electric machine 66 may be configured to be an induction machine or any other suitable electric machine capable of operation in traction applications. Furthermore, electric machine 66 may also be coupled to a heat engine within an Auxiliary Power Unit (APU) for generating electrical power to aid in the operation of a Hybrid-Electric Vehicle (HEV) or a Plug-in Hybrid-Electric Vehicle (PHEV).

As previously mentioned, semiconductor devices manufactured on a SiC substrate are capable of withstanding temperatures in excess of 200 degrees Celsius. Thus, SiC MOSFETs 86-96 have a temperature rating of at least 200 degrees Celsius, a rating that is significantly higher than that of conventional power electronics. While conventional power converters coupled to electric machines are mounted a significant distance away from the electric machine and equipped with their own cooling loop due to high-temperature sensitivity of the power electronics, power converter 58, being equipped with SiC MOSFETs 80-90, does not require such remote placement.

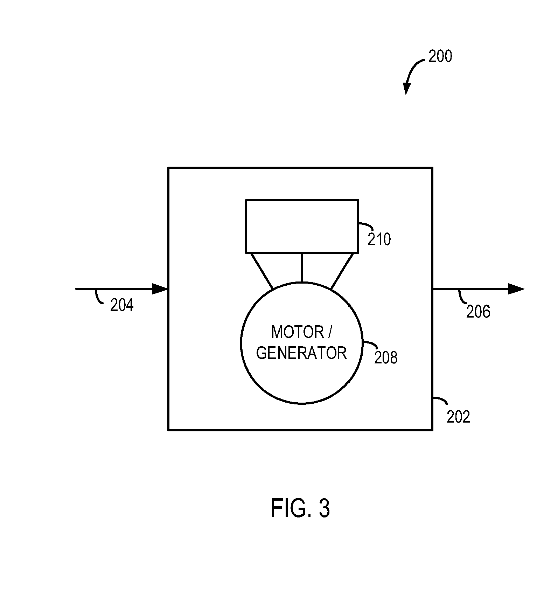

Accordingly, referring to FIG. 3, another embodiment of the invention is shown. FIG. 3 illustrates a schematic view of a drive system 200, which comprises a single cooling loop 202 having a coolant input 204 and a coolant output 206. The coolant entering single cooling loop 202 via coolant input 204 may be any suitable coolant (e.g., liquid, air, etc.). Specifically, the coolant used in cooling loop 202 may be an anti-freeze liquid or an automotive transmission fluid. An electric machine 208 is disposed within cooling loop 202. A power converter 210 is coupled to electric machine 208 and is also disposed within cooling loop 202. Power converter 210 is shown to have a three-phase connection with electric machine 208, but the invention is not limited to such a connection. For example, power converter 210 as well as electric machine 208 is also envisioned to use other number of multiple phases, including 3, 5, 7, 9, or an even higher number of phases.

While not shown in FIG. 3, it is to be understood that power converter 210 is configured similarly to power converter 58 as shown and described with respect to FIG. 2. That is, power converter 210 comprises a plurality SiC MOSFETs therein, the SiC MOSFETS having a temperature rating of at least 200 degrees Celsius and low switching losses. In one embodiment it is envisioned that packaging of power converter 210 and bi-directional DC-DC voltage converter 54 that boosts the source voltage 52 to the DC link 46 may be fully integrated within a housing of the electric machine and cooled with a single cooling loop. It is further envisioned that each switching device (not shown) in bi-directional DC-DC voltage converter 54 includes a silicon carbide (SiC) MOSFET and an associated anti-parallel diode with similar thermal and high frequency switching capability as in power converter 210. It is due to these unique features that power converter 210 is able to be fully integrated with electric machine 208 within cooling loop 202, as power converter 210 does not add any significant heat load to the cooling loop. The high temperature rating of the SiC MOSFETs within power converter 210 also enables power converter 210 to be placed in close proximity to electric machine 208. In fact, while not shown in FIG. 3, power converter 210 may be integrated into the same housing as electric machine 208, thereby creating an even more compact and simplified drive system. Single cooling loop 202 is configured to regulate the temperature of electric machine 208 and the power converter 210 to be a maximum of 150 degrees Celsius, well within the temperature ratings for both devices.

Additionally, while not shown in FIG. 3, it is to be understood that drive system 200 further comprises a voltage source (e.g., at least one of a battery, an ultracapacitor, a flywheel, etc.) coupled via a DC link to power converter 210, as is shown and described with respect to FIG. 2. The voltage source is to be disposed external to single cooling loop 202.

The overall weight, cost, and complexity of the drive system can be significantly reduced when utilizing single cooling loop 202 as shown in FIG. 3. In addition to the benefits of decreased cost, weight, and complexity made possible by consolidating electric machine 208 and power converter 210 into a single cooling loop 202, drive system 200 also provides for a reduction in electromagnetic interference (EMI) as compared to conventional electric drive systems. This reduction in EMI is due to the ability of power converter 210 to be mounted in very close proximity to (or integrated with) electric machine 208, which eliminates the need for long shielding cables to couple the power converter with the electric machine. These long shielding cables, and the extended distance between the power converter and the electric machine in general, have been known to cause significant EMI. Eliminating the need for such cables thereby reduces EMI.

Therefore, according to one embodiment of the invention, an electric drive system is shown, the electric drive system comprising an electric machine comprising a rotor and a stator, a power converter electrically coupled to the electric machine and configured to convert a DC link voltage to an AC output voltage to drive the electric machine, and a single cooling loop, wherein the electric machine and the power converter are integrated within the single cooling loop.

According to another embodiment of the invention, a method of manufacturing an electric drive system is shown, the method comprising the steps of providing a silicon carbide (SiC) power converter having a plurality of SiC switching devices, the SiC power converter coupleable to a power source, providing an electric machine having a rotor and a stator, coupling the SiC power converter to the electric machine to drive the electric machine, and providing a cooling loop, wherein the SiC power converter and the electric machine are integrated within the cooling loop.

According to yet another embodiment of the invention, a vehicle drive system is shown, the vehicle drive system comprising a motor comprising a rotor and a stator, a DC link, a power converter electrically coupled between the DC link and the motor to drive the motor, wherein the power converter comprises a plurality of silicon carbide (SiC) switching devices, and a cooling loop, wherein the motor and the power converter are integrated within the cooling loop.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An electric drive system comprising:
   an electric machine comprising a rotor and a stator;
   a power converter electrically coupled to the electric machine and configured to convert a DC link voltage to an AC output voltage to drive the electric machine; and
   a single cooling loop, wherein the electric machine and the power converter are integrated within the single cooling loop.
2. The electric drive system of clause 1 wherein the power converter comprises a plurality of silicon carbide (SiC) switching devices.
3. The electric drive system of clause 1 or clause 2 wherein the plurality of SiC switching devices comprise a plurality of SiC metal-oxide-semiconductor field effect transistors (MOSFETs).
4. The electric drive system of any preceding clause wherein the plurality of SiC MOSFETs have a temperature rating of at least 200 degrees Celsius.
5. The electric drive system of any preceding clause wherein the single cooling loop is configured to regulate the temperature of the electric machine and the power converter to be a maximum of 150 degrees Celsius.
6. The electric drive system of any preceding clause wherein the electric machine is one of a permanent magnet machine and an induction machine.
7. The electric drive system of any preceding clause wherein the electric machine is comprised of at least one of 3, 5, 7, and 9 phases.
8. The electric drive system of any preceding clause wherein the power converter further comprises plurality of diodes connected in an anti-parallel arrangement with the plurality of SiC MOSFETs.
9. The electric drive system of any preceding clause wherein the power converter is comprised of at least one of 3, 5, 7, and 9 phases.
10. The electric drive system of any preceding clause wherein the power converter is fully integrated within a housing of the electric machine.
11. The electric drive system of any preceding clause wherein the power converter and a bi-directional voltage DC-DC converter are fully integrated within the housing of the electric machine.
12. A method of manufacturing an electric drive system comprising the steps of:
   providing a silicon carbide (SiC) power converter having a plurality of SiC switching devices, the SiC power converter coupleable to a power source;
   providing an electric machine having a rotor and a stator;
   coupling the SiC power converter to the electric machine to drive the electric machine; and
   providing a cooling loop, wherein the SiC power converter and the electric machine are integrated within the cooling loop.
13. The method of manufacturing of any preceding clause wherein providing the SiC power converter comprises providing a SiC power converter having a plurality of metal-oxide-semiconductor field effect transistors (MOSFETs).
14. The method of manufacturing of any preceding clause wherein providing the SiC power converter comprises providing a SiC power converter having a plurality of SiC MOSFETs having a temperature rating of at least 200 degrees Celsius.
15. The method of manufacturing of any preceding clause wherein providing an electric machine comprises providing one of a permanent magnet machine and an induction machine.
16. A vehicle drive system comprising:
   a motor comprising:
      a rotor; and
      a stator;
      a DC link;
      a power converter electrically coupled between the DC link and the motor to drive the motor, wherein the power converter comprises a plurality of silicon carbide (SiC) switching devices; and
      a cooling loop, wherein the motor and the power converter are integrated within the cooling loop.
17. The vehicle drive system of any preceding clause wherein the plurality of SiC switching devices comprise a plurality of SiC metal-oxide-semiconductor field effect transistors (MOSFETs).
18. The vehicle drive system of any preceding clause wherein the plurality of SiC switching devices have a temperature rating of at least 200 degrees Celsius.
19. The vehicle drive system of any preceding clause further comprising a voltage source coupled to the DC link and configured to provide a source voltage to the DC link, wherein the voltage source is external to the cooling loop.
20. The vehicle drive system of any preceding clause wherein the voltage source comprises at least one of a battery, an ultracapacitor, and a flywheel.
21. The vehicle drive system of any preceding clause wherein the cooling loop is configured to regulate the temperature of the motor and the power converter to be a maximum of 150 degrees Celsius.
22. The vehicle drive system of any preceding clause wherein the motor comprises one of a permanent magnet motor and an induction motor.
23. The vehicle drive system of any preceding clause wherein the cooling loop comprises a coolant therein, the coolant being one of an anti-freeze liquid and an automotive transmission fluid.

## Claims

1. An electric drive system (44) comprising:
an electric machine (66, 208) comprising a rotor (110) and a stator (112);
a power converter (58, 210) electrically coupled to the electric machine (66, 208) and configured to convert a DC link voltage to an AC output voltage to drive the electric machine (66, 208); and
a single cooling loop (202), wherein the electric machine (66, 208) and the power converter (58, 210) are integrated within the single cooling loop (202).

2. The electric drive system (44) of claim 1 wherein the power converter (58, 210) comprises a plurality of silicon carbide (SiC) switching devices (80, 82, 84, 86, 88, 90).

3. The electric drive system (44) of claim 1 or claim 2 wherein the plurality of SiC switching devices (80, 82, 84, 86, 88, 90) comprise a plurality of SiC metal-oxide-semiconductor field effect transistors (MOSFETs).

4. The electric drive system (44) of any preceding claim wherein the plurality of SiC MOSFETs have a temperature rating of at least 200 degrees Celsius.

5. The electric drive system (44) of any preceding claim wherein the single cooling loop (202) is configured to regulate the temperature of the electric machine (66, 208) and the power converter (58, 210) to be a maximum of 150 degrees Celsius.

6. The electric drive system (44) of any preceding claim wherein the electric machine (66, 208) is one of a permanent magnet machine and an induction machine.

7. The electric drive system (44) of any preceding claim wherein the electric machine (66, 208) is comprised of at least one of 3, 5, 7, and 9 phases.

8. The electric drive system (44) of any preceding claim wherein the power converter (58, 210) further comprises plurality of diodes (92, 94, 96, 98, 100, 102) connected in an anti-parallel arrangement with the plurality of SiC MOSFETs.

9. The electric drive system of any preceding claim wherein the power converter (58, 210) is comprised of at least one of 3, 5, 7, and 9 phases.

10. The electric drive system of any preceding claim wherein the power converter 58, 210) is fully integrated within a housing of the electric machine (66, 208).

11. The electric drive system of any preceding claim wherein the power converter and a bi-directional voltage DC-DC converter are fully integrated within the housing of the electric machine.

12. A method of manufacturing an electric drive system comprising the steps of:
providing a silicon carbide (SiC) power converter having a plurality of SiC switching devices, the SiC power converter coupleable to a power source;
providing an electric machine having a rotor and a stator;
coupling the SiC power converter to the electric machine to drive the electric machine; and
providing a cooling loop, wherein the SiC power converter and the electric machine are integrated within the cooling loop.

13. The method of manufacturing of claim 12 wherein providing the SiC power converter comprises providing a SiC power converter having a plurality of metal-oxide-semiconductor field effect transistors (MOSFETs).

14. The method of manufacturing of claim 12 or claim 13 wherein providing the SiC power converter comprises providing a SiC power converter having a plurality of SiC MOSFETs having a temperature rating of at least 200 degrees Celsius.

15. The method of manufacturing of any of claims 12 to 14 wherein providing an electric machine comprises providing one of a permanent magnet machine and an induction machine.
